# EUROPEAN PATENT SPECIFICATION

(11) **EP 3 356 566 B1**
(45) Date of publication and mention of the grant of the patent: **21.09.2022**
(21) Application number: 16852532.7
(22) Date of filing: 29.09.2016
(51) Int. Cl.: C21D 9/54, C21D 8/06, G02B 27/64, C22F 3/00

(54) **THERMO-MECHANICAL STABILIZATION OF NITINOL WIRES IN AN OPTICAL IMAGE STABILIZATION SUSPENSION**
THERMOMECHANISCHE STABILISIERUNG VON NITINOLDRÄHTEN IN EINER OPTISCHEN BILDSTABILISIERUNGSAUFHÄNGUNG
STABILISATION THERMOMÉCANIQUE DE FILS DE NITINOL DANS UNE SUSPENSION DE STABILISATION D'IMAGE OPTIQUE

(30) Priority: 30.09.2015 US 201562234795 P
(43) Date of publication of application: 08.08.2018
(73) Proprietor: Hutchinson Technology Incorporated, Hutchinson, Minnesota 55350-9784 (US)
(72) Inventor: MYERS, Dean E., Stewart, Minnesota 55385 (US); SCHEELE, Bryan J., Hutchinson, Minnesota 55350 (US); SCHEELE, Daniel W., Hutchinson, Minnesota 55350 (US); LADWIG, Peter F., Hutchinson, Minnesota 55350 (US); JENNEKE, Richard R., Hutchinson, Minnesota 55350 (US); JOHNSON, Randy, J., Hutchinson, MN 55350 (US)
(74) Representative: Anderson, Oliver Ben
(86) International application number: PCT/US2016/054274
(87) International publication number: WO 2017/058975

(56) References cited:
- WO-A1-2014/083318
- CN-A- 103 543 073
- US-A- 6 149 742
- US-A1- 2011 249 131
- US-A1- 2015 135 703
- US-B1- 6 916 115
- US-B1- 8 409 372
- US-B2- 8 388 773

## Description

### FIELD OF THE INVENTION

The invention relates to a method for stabilizing the electrical performance of camera lens suspensions having shape memory alloy (SMA) wires, such as nitinol wires, used to actuate the suspensions.

### BACKGROUND

PCT International Application Publication Nos. WO 2014/083318 and WO 2013/175197 disclose a camera lens optical image stabilization (OIS) suspension system that has an upper or moving assembly (to which a camera lens element can be mounted) supported by a flexure element or spring plate on a bottom or stationary support assembly. The flexure element, which is formed from metal such as phosphor bronze, has a moving plate and flexures. The flexures extend between the moving plate and the stationary support assembly and function as springs to enable the movement of the moving assembly with respect to the stationary support assembly. The moving assembly and support assembly are coupled by nitinol or other shape memory alloy (SMA) wires extending between the assemblies. Each of the SMA wires has one end attached to the support assembly, and an opposite end attached to the moving assembly. During operation of the suspension system, the SMA wires are selectively driven by electrical signals to move the moving assembly with respect to the support assembly to actuate the suspension.

At least in part because of the phase change-related properties of the SMA wires, the wires are typically subjected to a stabilization process, also sometimes known as "burn in," as part of the manufacture of these suspensions. A purpose of the stabilization process is to stabilize characteristics such as wire stroke length and resistance asymmetry to provide a stable condition for calibration and to enhance the consistency and accuracy of the suspension's operation. During known stabilization processes the assembled suspensions are electrically connected to a controller, and electrical drive signals are repeatedly applied to the device to cycle the wires through the phase changes. This electrical burn in (EB) stabilization process requires relatively complicated equipment and is relatively time consuming to perform.

There remains a continuing need for improved methods for manufacturing suspensions of these types. In particular, there is a need for such suspension manufacturing methods that are effective, robust and efficient to perform. A burn in stabilization process that meets these objectives would be especially desirable.

U.S. Patent No. 8,409,372 describes methods and apparatus for stabilizing the strain-temperature response for a shape memory alloy are provided. To perform stabilization of a second sample of the shape memory alloy, a first sample of the shape memory alloy is selected for isobaric treatment and the second sample is selected for isothermal treatment. When applying the isobaric treatment to the first sample, a constant stress is applied to the first sample. Temperature is also cycled from a minimum temperature to a maximum temperature until a strain on the first sample stabilizes. Once the strain on the first sample stabilizes, the isothermal treatment is performed on the second sample. During isothermal treatment, different levels of stress on the second sample are applied until a strain on the second sample matches the stabilized strain on the first sample.

U.S. Patent No. 6,916,115 describes instruments and methods for measuring a property of a shape memory alloy are provided The instrument includes a base plate, a non-contact movable mass, a force gauge, an actuator, a biasing spring, a heater for heating the shape memory alloy, and a non-contact displacement detector. The biasing spring and the shape memory alloy are disposed whereby a force applied thereby is applied substantially through a center of stiffness of the movable mass. The displacement detector measures a displacement of the movable mass in a colinear direction with a direction of movement of the movable mass and with a direction of the force applied by the biasing spring and the shape memory alloy. The linear motion stage comprises a housing and at least one guide bar, and wherein a calculated axial expansion of the guide bar is substantially equal to a calculated axial expansion of the base plate.

U.S. Patent Publication No. US2011/0249131 describes a camera apparatus capable of providing optical image stabilization comprises: a support structure; a camera unit comprising an image sensor and a lens system; a suspension system comprising a plurality of flexure elements supporting the camera unit on the support structure in a manner allowing the camera unit to tilt; and plurality of SMA actuators each formed as SMA wire connected between the camera unit and the support structure. A vibration sensor, whose output is used as the basis for generating drive signals, may be mounted on the camera unit.

### SUMMARY

The matter for protection is defined by the claims. Described herein are a method and system for stabilizing properties of shape memory alloy (SMA) wires in an optical image stabilization (OIS) suspension of the type having a first or support section and a second or moving section coupled with respect to one another by the SMA wires. In examples, the method comprises cyclically mechanically straining and de-straining the wires by moving the moving and support sections with respect to one another. Heat is applied to the wires while mechanically straining and de-straining the wires. The temperature, strain, and de-strain levels are configured to cause the wires to cyclically transition between austenite and martensite phases during the mechanical straining and de-straining.

### BRIEF DESCRIPTION OF THE DRAWINGS

FIG. 1 is an illustration of a thermo-mechanical stabilization system in accordance with embodiments of the invention, with optical image stabilization (OIS) suspensions on the stabilization system.
FIG. 2 is detailed illustration of a portion of the system shown in FIG. 1, including an OIS suspension.
FIG. 3 is an illustration of an alternative releasable mounting structure for use with the system shown in FIG. 1.
FIG. 4 is an illustration of an alternative releasable mounting structure for use with the system shown in FIG. 1.
FIG. 5 is a graph of stress v. strain at constant wire temperature (105 deg C) representing a Nitinol wire having 100 repeated cycles or phase transitions from unstressed austenite to stressed martensite showing stabilization of stress plateau and strain offset properties in accordance with embodiments of the invention.
FIG. 6 is a graph of measured average wire resistance asymmetry v. test conditions for OIS suspensions subjected to thermo-mechanical burn in in accordance with embodiments of the invention and prior art electrical burn in (EB). Resistance asymmetry is a ratio characterization of measured wire resistance between the strained and de-strained states.
FIG. 7 is a graph of measured average actuator stroke v. test conditions for OIS suspensions subjected to thermo-mechanical burn in in accordance with embodiments of the invention and prior art EB.
FIG. 8 is an illustration of an embodiment of an apparatus in accordance with embodiments of the invention that can thermally and mechanically stabilize SMA wire performance before the wire is installed within an OIS actuator assembly.

### DESCRIPTION OF THE INVENTION

Embodiments of the invention include a thermo-mechanical stabilization or burn in system and process for shape memory alloy (SMA) optical image stabililzation (OIS) suspensions. During the thermo-mechanical stabilization process, upper or moving sections or assemblies of the suspensions are reciprocally moved with respect to the bottom or stationary support sections or assemblies to alternately tension and de-tension or recover (i.e., to strain and de-strain or recover) the SMA wires while the wires are heated or otherwise maintained at a predetermined temperature. In embodiments, the moving and support assemblies of the suspensions are alternately tensioned and de-tensioned by amounts and at a temperature at which this action and heat causes the SMA wires to cyclically undergo phase transitions between the austenite and martensite phases. The temperature and amounts of tension and de-tension can be selected to optimize stabilization results and to minimize possible damage to the wires (e.g., work hardening of the wires). Other parameters that can be varied to optimize the stabilization results include the number of strain cycles and the frequency of strain or cycles.

In embodiments, the stationary support assemblies of a plurality of the suspensions are fixedly mounted to a stationary plate that is heated by a heater. The plurality of associated moving assemblies of the suspensions are mounted to an upper moving plate. The upper moving plate is reciprocally driven in a back-and-forth manner with respect to the stationary plate to move the moving assemblies with respect to the stationary support assemblies of the suspensions during the stabilization process.

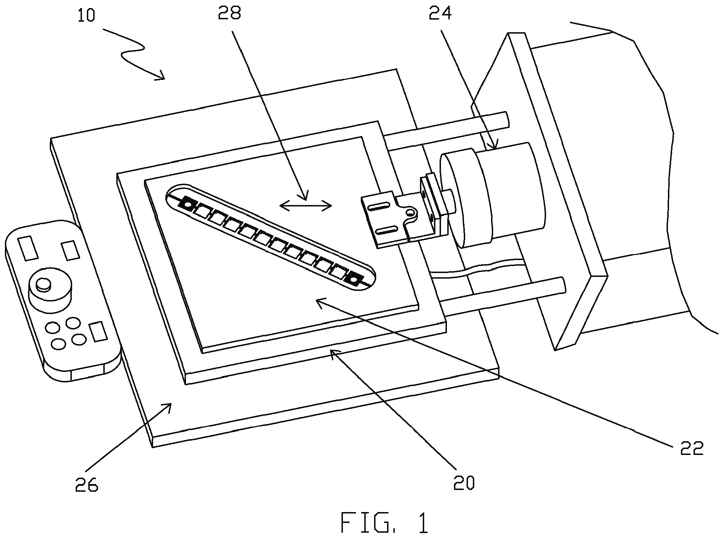

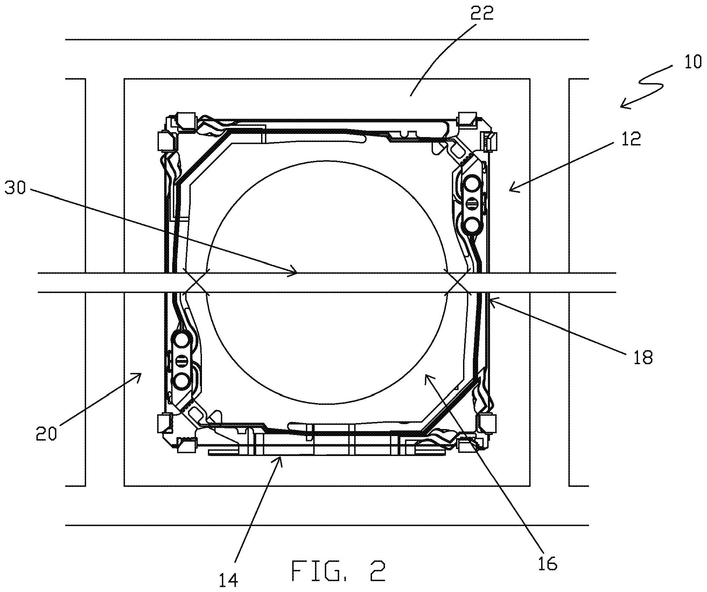

For example, FIGs. 1 and 2 illustrate a thermo-mechanical stabilization or burn in system 10 and process in accordance with embodiments of the invention and shape memory alloy (SMA) optical image stabilization (OIS) suspensions 12 that can be processed by the system and method. As shown in FIG. 2, an exemplary OIS suspension 12 includes a stationary support or bottom assembly 14, a moving or upper assembly 16, and SMA wires 18. Each of the wires 18 extends between the bottom assembly 14 and the upper assembly 16. The illustrated embodiment of OIS suspension 12 has four SMA wires 18 arranged in a rectangular pattern, although other embodiments (not shown) have greater or lesser numbers of such wires. System 10 includes a stationary or bottom plate 20, a moving or top plate 22, actuator 24 and heater 26. In the illustrated embodiment, heater 26 is a hot plate that heats the suspensions 12 through the bottom plate 20. In other embodiments (not show), for example, the heater can be a heated air gun or an oven in which the system 10 is operated. Actuator 24 is a voice coil shaker in the illustrated embodiment, and reciprocally moves the top plate 22 (e.g., about path or axis 28). A controller (not shown) is coupled to the actuator and optionally the heater.

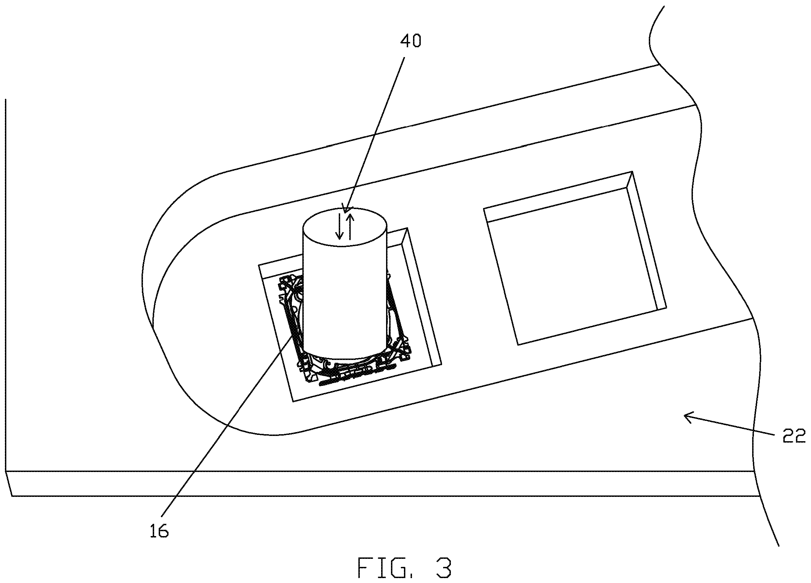

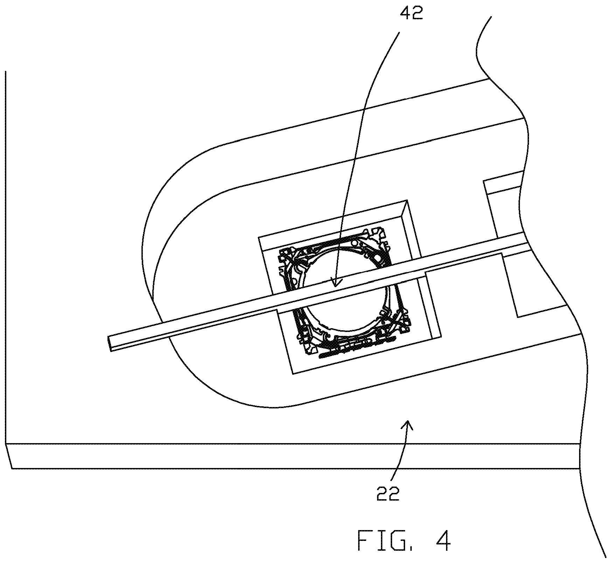

During a stabilization procedure, the bottom assembly 14 of each suspension 12 is mounted to the bottom plate 20 of the system 10, and the upper assembly 16 of each suspension is mounted to the top plate 22. Embodiments of the system 10 include mounting structure (not visible) enabling the bottom assembly 14 of each suspension 12 to be coupled to the bottom plate 20 during the stabilization procedure, and released and removed from the plate following the procedure. Similarly, a mounting structure such as the rod 30 shown FIG. 2 can couple the upper assembly 16 of each suspension 12 to the top plate 22. In embodiments, system 10 can include structures such as the pin 40 of FIG. 3 or the key stock 42 of FIG. 4 to engage the opening in the upper assembly 16 and couple the upper assembly to the top plate 22 during the stabilization procedure, and released and removed from the plate following the burn in procedure. In the illustrated embodiment the suspensions 12 are mounted at an angle (e.g., 45°) with respect to the mechanical motion axis 28, enabling pairs of SMA wires 18 sharing a moving crimp to be simultaneously strained or de-strained by the movement of the top plate 22 about the axis 28. Other embodiments (not shown) are configured for OIS suspensions that have fewer or more than four SMA wires, and/or such wires that have other geometrical configurations. In these and other embodiments, the stabilization system and method can be configured to operate on fewer than all the wires at the same time.

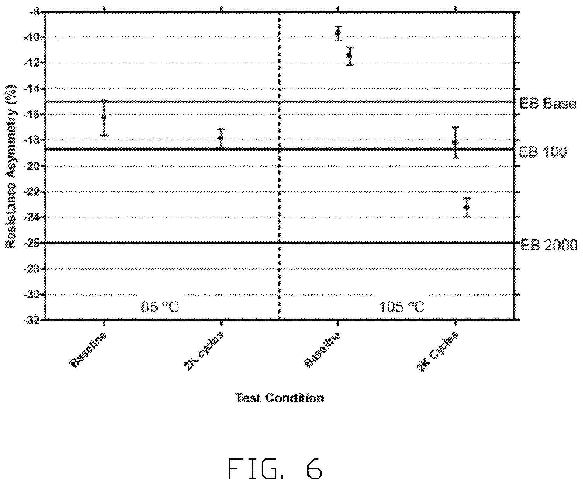

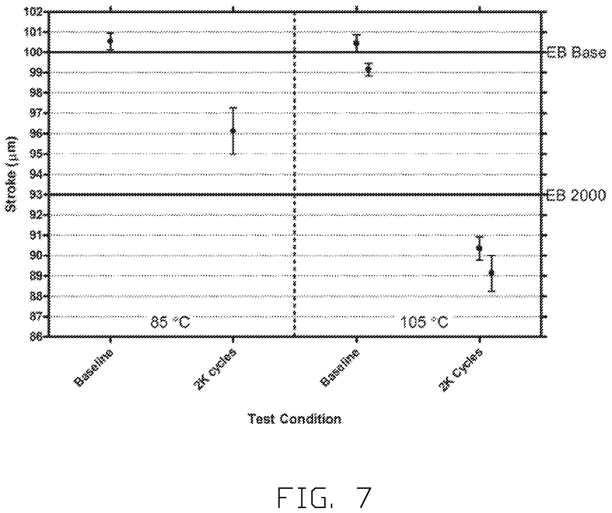

By way of example, suspensions having four nitinol wires were subjected to a stabilization procedure in accordance with embodiments at parameters including a temperature of 105° C and two thousand cycles at 15 Hz. Measured parameters of the parts following the stabilization included (1) average part movement at cold temperature of 163.4 µm ∼ 2.4% strain, and (2) measured part movement at hot temperature of 142.5 µm ∼ 2.1% strain. Other stabilization process test parameters included 125 cycles at 30 Hz (approximately 4 sec.) and 85° C. These test parameters produced part test results having a mean ± 1 standard deviation shown in FIGs. 6 and 7 as single (85 deg C) or replicated (105 deg C) data points.

Yet other embodiments of the invention include other structures and methods for providing the relative movement between the moving and stationary support assemblies of the suspensions. For example, the moving assemblies of the suspensions can be free from engagement by the system while the stationary support assemblies of the suspensions are driven at frequencies and over distances that cause the desired relative movement between the moving and stationary support assemblies. Stated alternatively, the inertia of the moving assemblies, when unconstrained by structures other than those of the suspensions themselves, results in the relative movement when the stationary support assemblies are driven.

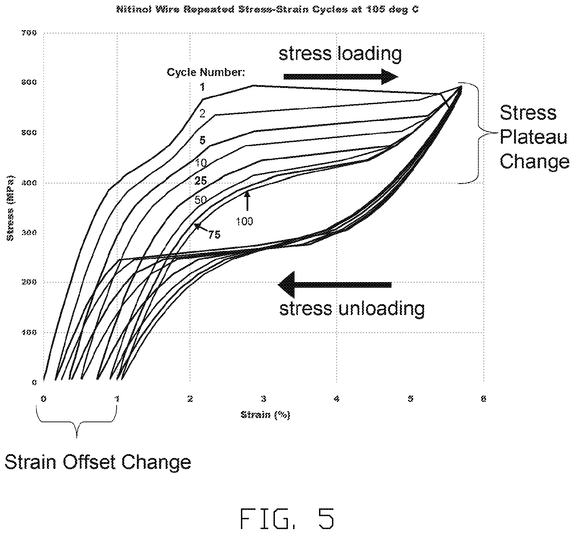

Embodiments of the invention provide significant advantages. The method stabilizes nitinol wire electrical performance using the heat and repetitive mechanical strain. The heated nitinol wires within the OIS suspension are repeatedly mechanically driven during manufacturing to provide a stable position calibrated to the wire's resistance properties. The thermo-mechanical stabilization process (1) uses less complex process equipment than prior art approaches through elimination of electrical pinning, (2) facilitates longer burn in for better stabilization, and (3) provides for enhanced product stiffness during test. As shown by FIG. 5, embodiments of the invention can strain wire between austenite and martensite phases at a constant temperature before the wire is installed within an OIS actuator assembly. The stress plateau stabilization during wire loading (increasing stress) and strain offset stabilization during wire unloading (decreasing stress) are correlated to changes in a wire's stroke and resistance properties within an OIS actuator. With respect to prior art approaches using a thirty second, one hundred cycle electrical burn in (EB) process, embodiments of the invention have been able to provide the equivalent stroke burn in of two thousand electrical burn in cycles and an equivalent resistance asymmetry burn in of one hundred electrical burn in cycles at 105° C and ±2.1% strain cycling. FIG. 6 is a graph of measured asymmetry of suspensions stabilized using embodiments of the invention (test conditions of two thousand cycles at 85° C and 105° C). For purposes of reference, baseline values and corresponding measured values using one hundred and two thousand EB cycles are also shown. FIG. 7 is a graph of measured stroke of suspensions stabilized using embodiments of the invention (test conditions of two thousand cycles at 85° C and 105° C). For purposes of reference, baseline values and corresponding measured values using two thousand EB cycles are also shown.

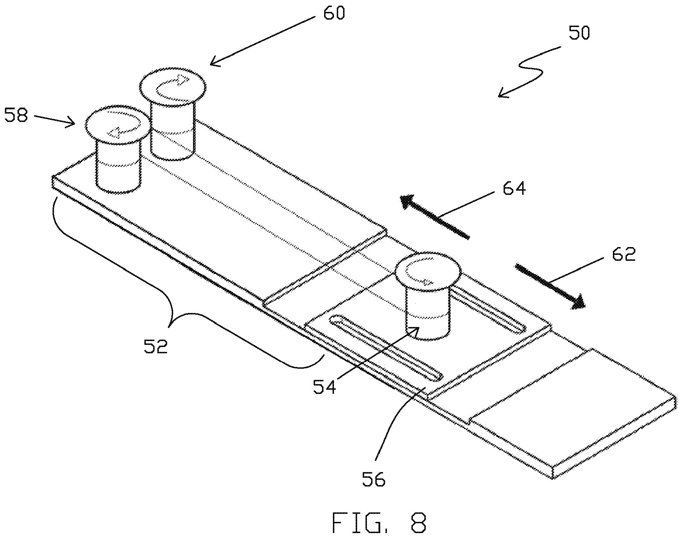

In other embodiments, the shape memory wire is subjected to thermo-mechanical burn in stabilization procedures before it is attached to the OIS suspensions. For example, lengths of the wire can be unwound from a supply spool and rewound on a different spool after the wire has traveled through a heated zone. The straining and de-straining of the wire during the heat zone dwell time can be accomplished by wire travel around single or multiple idler rollers affixed to a moving and controlled linear stage. FIG. 8, for example, illustrates an apparatus 50 having a wire heat zone 52, an idle roller 54 on a surface 56 that can move with respect to heat zone 52, un-spool drive roller 58 and re-spool drive roller 60. Roller 54 can be moved by surface 56 to increase strain (indicated by arrow 62) and to decrease strain (indicated by arrow 64) in the wire in the heat zone 52. Alternatively, the idler roller can be stationary or non-existent for embodiments in which one or both drive rollers have their rotational speed adjusted to induce strain changes in the wire that is suspended in the heat zone. The heat zone could represent wire travel through convective, conductive or radiated equipment. After the length and/or resistance properties of wire are stabilized, it can be installed within an OIS actuator having subsequent electrical burn in processes eliminated or minimized with respect to cycle time.

## Claims

1. A method for stabilizing properties of shape memory alloy (SMA) wires in a plurality of optical image stabilization suspensions of the type having a support section and a moving section coupled with respect to one another by a plurality of SMA wires, the method comprising:
mounting a plurality of moving sections of the plurality of optical image stabilization suspensions that each include a plurality of SMA wires to a moving plate of a system;
mounting a plurality of support sections of the plurality of optical image stabilization suspensions to a stationary plate of the system, each of the plurality of support sections coupled with a respective one of the plurality of moving sections by a plurality of SMA wires;
heating the plurality of SMA wires of the optical image stabilization suspensions; and
cyclically mechanically straining and de-straining the SMA wires by moving the moving plate with the plurality of moving sections and stationary plate with the plurality of support sections with respect to one another.

2. The method of claim 1 including straining and de-straining the wires to cause the wires to cyclically transition between austenite and martensite phases.

3. The method of claim 1 including applying heat to the wires while mechanically straining and de-straining the wires.

4. The method of claim 3 wherein the temperature, strain, and de-strain levels are configured to cause the wires to cyclically transition between austenite and martensite phases during the mechanical straining and de-straining.

5. The method of claim 1 wherein moving the moving and support sections with respect to one another includes driving at least one of the moving and support sections with respect to one another.

6. The method of claim 5 including retaining one of the moving and support sections stationary while driving the other of the moving and support sections.

7. The method of claim 1 wherein moving the moving and support sections with respect to one another includes moving the moving and support sections with respect to one another about a path that is non-parallel to at least some of the SMA wires.

8. The method of any of claim 7 wherein moving the moving and support sections with respect to one another includes moving the moving and support assemblies about a path that is offset by about 45 degrees to at least some of the SMA wires.

9. A stabilization system for performing thermo-mechanical burn in of SMA wires of a plurality of optical image stabilization, OIS, suspensions, each having a moving section coupled to a support section by a plurality of SMA wires, the system including:
a fixture including a moving plate and a stationary plate for holding the plurality of the OIS suspensions that each include a moving section and a support section, each moving section coupled to a respective support section by a plurality of SMA wires;
a heater configured to heat the SMA wires of the OIS suspensions; and
an actuator coupled to the fixture for moving the moving section of each suspension with respect to the support section of each associated suspension to cyclically mechanically strain and de-strain the SMA wires.

10. The stabilization system of claim 9, wherein the heater is a hot plate.

11. The stabilization system of claim 10 including a controller coupled to the actuator and heater.

12. The stabilization system of claim 9 and further including a controller coupled to the actuator.

13. The stabilization system of claim 9 wherein the fixture and actuator are configured such that the actuator moves the moving section with respect to the support section about a path that is non-parallel with at least one of the SMA wires.

14. The stabilization system of claim 13 wherein the fixture and actuator are configured such that the actuator moves the moving section with respect to the support section about a path at a 45° angle with at least one of the SMA wires.

## Patentansprüche

1. Verfahren zum Stabilisieren der Eigenschaften von Formgedächtnislegierungs-(SMA)-Drähten in einer Vielzahl von optischen Bildstabilisierungsaufhängungen mit einem Stützabschnitt und einem beweglichen Abschnitt, die durch eine Vielzahl von SMA-Drähten miteinander gekoppelt sind, das Verfahren umfassend:
Anbringen einer Vielzahl von beweglichen Abschnitten der Vielzahl von optischen Bildstabilisierungsaufhängungen, die jeweils eine Vielzahl von SMA-Drähten beinhalten, an einer beweglichen Platte eines Systems;
Anbringen einer Vielzahl von Stützabschnitten der Vielzahl von optischen Bildstabilisierungsaufhängungen an einer stationären Platte des Systems, wobei jeder der Vielzahl von Stützabschnitten mit einem jeweiligen der Vielzahl von beweglichen Abschnitten durch eine Vielzahl von SMA-Drähten gekoppelt ist;
Erwärmen der Vielzahl von SMA-Drähten der optischen Bildstabilisierungsaufhängungen; und
zyklisches mechanisches Spannen und Entspannen der SMA-Drähte durch Bewegen der beweglichen Platte mit der Vielzahl von beweglichen Abschnitten und der stationären Platte mit der Vielzahl von Stützabschnitten in Bezug aufeinander.

2. Verfahren nach Anspruch 1, einschließlich Spannen und Entspannen der Drähte, um zu bewirken, dass die Drähte zyklisch zwischen Austenit- und Martensitphasen wechseln.

3. Verfahren nach Anspruch 1, einschließlich Aufbringen von Wärme auf die Drähte, während die Drähte mechanisch gespannt und entspannt werden.

4. Verfahren nach Anspruch 3, wobei die Temperatur-, Dehnungs- und Entlastungsniveaus konfiguriert sind, um zu bewirken, dass die Drähte während dem mechanischen Spannen und Entspannen zyklisch zwischen Austenit- und Martensitphasen wechseln.

5. Verfahren nach Anspruch 1, wobei das Bewegen der Bewegungs- und Stützabschnitte in Bezug aufeinander das Antreiben zumindest eines der Bewegungs- und Stützabschnitte in Bezug zueinander beinhaltet.

6. Verfahren nach Anspruch 5, einschließlich Aufrechterhalten von einem der Bewegungs- und Stützabschnitte im stationären Zustand, während der andere der Bewegungs- und Stützabschnitte angetrieben wird.

7. Verfahren nach Anspruch 1, wobei das Bewegen der Bewegungs- und Stützabschnitte in Bezug zueinander das Bewegen der Bewegungs- und Stützabschnitte in Bezug zueinander um einen Weg einschließt, der nicht parallel zu mindestens einigen der SMA-Drähte ist.

8. Verfahren nach einem der Ansprüche 7, wobei das Bewegen der Bewegungs- und Stützabschnitte in Bezug zueinander das Bewegen der Bewegungs- und Stützanordnungen um einen Pfad umfasst, der um etwa 45 Grad zu mindestens einigen der SMA-Drähte versetzt ist.

9. Stabilisierungssystem zum Durchführen eines thermomechanischen Einbrennens von SMA-Drähten einer Vielzahl von Aufhängungen zur optischen Bildstabilisierung, OIS, die jeweils einen beweglichen Abschnitt aufweisen, der durch eine Vielzahl von SMA-Drähten mit einem Stützabschnitt gekoppelt ist, das System beinhaltend:
eine Befestigungsvorrichtung, einschließlich einer beweglichen Platte und einer stationären Platte zum Halten der Vielzahl von OIS-Aufhängungen, die jeweils einen beweglichen Abschnitt und einen Stützabschnitt beinhalten, wobei jeder bewegliche Abschnitt durch eine Vielzahl von SMA-Drähten mit einem entsprechenden Stützabschnitt gekoppelt ist;
eine Heizung, die konfiguriert ist, die SMA Drähte der OIS-Aufhängungen zu erwärmen; und
ein Stellglied, das mit der Vorrichtung gekoppelt ist, um den beweglichen Abschnitt jeder Aufhängung in Bezug auf den Stützabschnitt jeder damit verbundenen Aufhängung zu bewegen, um die SMA-Drähte zyklisch mechanisch zu spannen und zu entspannen.

10. Stabilisierungssystem nach Anspruch 9, wobei die Heizung eine Heizplatte ist.

11. Stabilisierungssystem nach Anspruch 10, einschließlich einer Steuerung, die mit dem Stellglied und der Heizung gekoppelt ist.

12. Stabilisierungssystem nach Anspruch 9 und ferner beinhaltend eine Steuerung, die mit dem Stellglied gekoppelt ist.

13. Stabilisierungssystem nach Anspruch 9, wobei die Befestigungsvorrichtung und das Stellglied so konfiguriert sind, dass das Stellglied den beweglichen Abschnitt in Bezug auf den Stützabschnitt um einen Pfad bewegt, der nicht parallel zu mindestens einem der SMA-Drähte verläuft.

14. Stabilisierungssystem nach Anspruch 13, wobei die Halterung und das Stellglied so konfiguriert sind, dass das Stellglied den beweglichen Abschnitt in Bezug auf den Stützabschnitt um einen Pfad in einem Winkel von 45° mit mindestens einem der SMA-Drähte bewegt.

## Revendications

1. Procédé de stabilisation des propriétés de fils en alliage à mémoire de forme (SMA) dans une pluralité de suspensions de stabilisation d'image optique du type ayant une section de support et une section mobile couplées l'une par rapport à l'autre par une pluralité de fils SMA, le procédé comprenant :
le montage d'une pluralité de sections mobiles de la pluralité de suspensions de stabilisation d'image optique qui comportent chacune une pluralité de fils SMA sur une plaque mobile d'un système ;
le montage d'une pluralité de sections de support de la pluralité de suspensions de stabilisation d'image optique sur une plaque fixe du système, chacune de la pluralité de sections de support étant couplée à une section respective de la pluralité de sections mobiles par une pluralité de fils SMA ;
le chauffage de la pluralité de fils SMA des suspensions de stabilisation d'image optique ; et
le fait de tendre et de détendre mécaniquement de manière cyclique les fils SMA par déplacement de la plaque mobile avec la pluralité de sections mobiles et de la plaque fixe avec la pluralité de sections de support l'une par rapport à l'autre.

2. Procédé selon la revendication 1, comprenant le fait de tendre et de détendre les fils pour amener les fils à effectuer une transition cyclique entre les phases austénitique et martensitique.

3. Procédé selon la revendication 1, comprenant l'application de chaleur aux fils tout en tendant et en détendant de manière mécanique les fils.

4. Procédé selon la revendication 3, dans lequel les niveaux de température, de mise en tension et de réduction de tension sont configurés pour amener les fils à effectuer une transition cyclique entre les phases austénitique et martensitique pendant la mise en tension et la réduction de la tension mécanique.

5. Procédé selon la revendication 1, dans lequel le déplacement des sections mobiles et de support les unes par rapport aux autres comporte l'entraînement d'au moins une des sections mobiles et de support l'une par rapport à l'autre.

6. Procédé selon la revendication 5, comprenant la retenue de l'une des sections mobiles et de support fixes tout en entraînant l'autre des sections mobiles et de support.

7. Procédé selon la revendication 1, dans lequel le déplacement des sections mobiles et de support les unes par rapport aux autres comprend le déplacement des sections mobiles et de support les unes par rapport aux autres autour d'un trajet qui n'est pas parallèle à au moins une partie des fils SMA.

8. Procédé selon l'une quelconque de la revendication 7, dans lequel le déplacement des sections mobiles et de support les une par rapport aux autres comprend le déplacement des ensembles mobiles et de support autour d'un trajet qui est décalé d'environ 45 degrés par rapport à au moins une partie des fils SMA.

9. Système de stabilisation pour réaliser une cuisson thermomécanique de fils SMA d'une pluralité de suspensions de stabilisation d'image optique, OIS, ayant chacune une section mobile couplée à une section de support par une pluralité de fils SMA, le système comprenant :
une fixation comportant une plaque mobile et une plaque fixe pour maintenir la pluralité de suspensions OIS qui comprennent chacune une section mobile et une section de support, chaque section mobile étant couplée à une section de support respective par une pluralité de fils SMA ;
un dispositif de chauffage configuré pour chauffer les fils SMA des suspensions OIS ; et
un actionneur couplé à la fixation pour déplacer la section mobile de chaque suspension par rapport à la section de support de chaque suspension associée pour tendre et détendre mécaniquement de manière cyclique les fils SMA.

10. Système de stabilisation selon la revendication 9, dans lequel le dispositif de chauffage est une plaque chauffante.

11. Système de stabilisation selon la revendication 10, comprenant un dispositif de commande couplé à l'actionneur et au dispositif de chauffage.

12. Système de stabilisation selon la revendication 9 et comprenant en outre un dispositif de commande couplé à l'actionneur.

13. Système de stabilisation selon la revendication 9, dans lequel la fixation et l'actionneur sont configurés de telle sorte que l'actionneur déplace la section mobile par rapport à la section de support autour d'un trajet qui n'est pas parallèle à au moins l'un des fils SMA.

14. Système de stabilisation selon la revendication 13, dans lequel la fixation et l'actionneur sont configurés de telle sorte que l'actionneur déplace la section mobile par rapport à la section de support autour d'un trajet selon un angle de 45° avec au moins l'un des fils SMA.
